## Europäisches Patentamt
## European Patent Office
## Office européen des brevets

(19)

(11) Veröffentlichungsnummer: **0 139 866**
**B1**

(12) **EUROPÄISCHE PATENTSCHRIFT**

(45) Veröffentlichungstag der Patentschrift:
17.12.86

(51) Int. Cl.⁴: **B 28 D 1/14**

(21) Anmeldenummer: **84108266.2**

(22) Anmeldetag: **13.07.84**

(54) Bohrvorrichtung zur Herstellung von Bohrlöchern mit Hinterschneidung.

(30) Priorität: **12.09.83 DE 3332806**

(43) Veröffentlichungstag der Anmeldung:
**08.05.85 Patentblatt 85/19**

(45) Bekanntmachung des Hinweises auf die Patenterteilung:
**17.12.86 Patentblatt 86/51**

(84) Benannte Vertragsstaaten:
**AT BE CH FR GB IT LI NL**

(56) Entgegenhaltungen:
**AT-B-230 252**
**DE-A-2 800 368**
**DE-A-3 027 408**
**GB-A-737 138**

(73) Patentinhaber: **fischer- werke Artur Fischer GmbH & Co. KG, Weinhalde 14- 18, D-7244 Tumlingen/Waldachtal 3 (DE)**

(72) Erfinder: **Fischer, H. C. Artur, Dr., Weinhalde 34, D-7244 Tumlingen/Waldachtal 3 (DE)**

EP 0 139 866 B1

LIBER, STOCKHOLM 1986

## Beschreibung

Die Erfindung betrifft eine in einen Bohrhammer bzw. eine Schlagbohrmaschine einspannbare und zur Herstellung von Bohrlöchern mit Hinterschneidung bestimmte Bohrvorrichtung, bestehend aus einem radial den Bohrschaft überragenden Seitenschneiden aufweisenden Bohrkopf, einem im Bereich des Bohrschaftes sitzenden Anschlagteil, das sich an einer über den Bohrschaft gestülpten Anschlagplatte zur Bildung eines Schwenklagers abstützt, und einer mit der Anschlagplatte verbindbaren Bohrglocke, die einen radial abstehenden, als Handgriff ausgebildeten Absaugstutzen aufweist.

Eine solche bekannte Bohrvorrichtung (DE-A-3 027 408) ermöglicht in einfacher Weise das Herstellen von Bohrungen mit einer Hinterschneidung in der Bohrlochtiefe durch Schwenken des Bohrers, wenn die gewünschte Bohrlochtiefe erreicht ist. Die Anschlagplatte nimmt dabei den beim Bohr- und Schwenkvorgang entstehenden Anpreßdruck auf. An den an der Bohrglocke angeordneten Absaugstutzen ist eine Bohrmehlabsaugvorrichtung anschließbar, sodaß das beim Bohren anfallende und sich in der Bohrglocke sammelnde Bohrmehl während des Bohrvorganges abgesaugt werden kann. Der Absaugstutzen dient gleichzeitig als Handgriff zur Führung und zum Halten der Bohrglocke. Mit der anderen Hand wird die Bohrmaschine gehalten.

Die Handhabung von Bohrmaschinen erfolgt üblicherweise beidhändig, wobei die Maschine mit einer Hand am Pistolengriff und mit der anderen Hand am seitlich abstehenden Handgriff gehalten wird. Abgesehen von der besseren Handhabung sollen mit dem seitlichen Handgriff die beim Verklemmen des Bohrers eventuell auftretenden Drehmomentkräfte abgefangen werden. Beim Bohren mit der eingangs erwähnten Bohrvorrichtung und der Benutzung des als Handgriff ausgebildeten Absaugstutzens der Bohrglocke können die beim Bohren und Schwenken gegebenenfalls auftretenden Drehmomente nur mit der die Bohrmaschine haltenden Hand aufgenommen werden.

Der Erfindung liegt daher die Aufgabe zugrunde, die eingangs erwähnte Bohrvorrichtung derart zu verbessern, daß auch über den als Handgriff ausgebildeten Absaugstutzen an der Bohrglocke ein Abfangen von auf die Bohrmaschine wirkenden Drehmomenten möglich ist.

Erfindungsgemäß wird dies dadurch erreicht, daß zwischen der Bohrglocke und dem Gehäuse der Bohrmaschine eine die Schwenkbewegung und eine Axialverschiebung der Bohrmaschine ermöglichende Verbindung besteht.

Die Verbindung zwischen Bohrglocke und dem Gehäuse der Bohrmaschine ist so gestaltet, daß sie die zum Ausformen der Hinterschneidung notwendige Schwenkbewegung der Bohrmaschine gegenüber der an der Außenfläche des Mauerwerks anliegenden Bohrglocke nicht beeinträchtigt. Ferner bleibt die Verbindung auch dann bestehen, wenn die Bohrmaschine zum besseren Herausfördern des Bohrmehls zurückgezogen wird, und somit durch entsprechend eingebautes Spiel zwischen Anschlagteil und Anschlagplatte sowie im Schlagwerk der Bohrmaschine eine Axialverschiebung stattfindet. Über die Verbindung ist die Bohrglocke mit dem Gehäuse der Bohrmaschine drehmomentübertragend verbunden, sodaß die auf das Gehäuse wirkenden Drehmomente bei Verklemmen des Bohrers mit dem als Handgriff ausgebildeten Absaugstutzen an der Bohrglocke abgefangen werden können. Die erfindungsgemäße Lösung ermöglicht damit trotz Halterung an der Bohrglocke eine der bei Bohrmaschinen mit am Gehäuse fest angebrachtem Handgriff adäquate Handhabung.

In einer weiteren Ausgestaltung der Erfindung können das Bohrmaschinengehäuse und die Bohrglocke mit jeweils einem parallel zur Bohrerachse verlaufenden und gegeneinander gerichteten Verbindungsteil versehen sein, wobei die Verbindungsteile teleskopartig ineinandergreifen. Die Verbindungsteile überbrücken den Abstand zwischen der im Bereich des Bohrers angeordneten Bohrglocke und dem Bohrmaschinengehäuse. Da beide Verbindungsteile parallel zur Bohrerachse verlaufen und ineinandergreifen, ergibt sich eine achsparallele Ausrichtung der Bohrglocke sowie die die Schwenkbewegung und eine Axialverschiebung ermöglichende drehmomentaufnehmende Verbindung.

Eine besonders vorteilhafte in Rotationsrichtung weitgehendst spielfreie Verbindung wird in weiterer Ergänzung der Erfindung dadurch erreicht, daß das Verbindungsteil des Bohrmaschinengehäuses aus einer Tragplatte besteht, an der ein an seinem Ende einen kugelförmigen Kopf aufweisender Stift angeordnet ist, der in das als Hülse ausgebildete Verbindungsteil der Bohrglocke eingreift.

Schließlich kann in einer weiteren Ergänzung der Erfindung die Tragplatte mit einer an sich bekannten, über eine Mutter verspannbaren Stahlbandmanschette an dem Bohrmaschinengehäuse befestigt sein. Mit der Stahlbandmanschette kann die Tragplatte verdrehsicher an dem üblicherweise im Anschluß an die Bohreraufnahme vorhandenen zylindrischen Bund des Bohrmaschinengehäuses befestigt werden. In gleicher Weise wird bekanntermaßen auch der Handgriff an einer Bohrmaschine befestigt.

In Ergänzung der Erfindung kann das als Hülse ausgebildete Verhindungsteil in einem Stück mit der Bohrglocke hergestellt sein. Die einstückige Herstellung von Bohrglocke und Verbindungsteil ergibt eine ausreichende Stabilität zur Aufnahme der beim Verklemmen des Bohrers eventuell auftretenden Drehmomente.

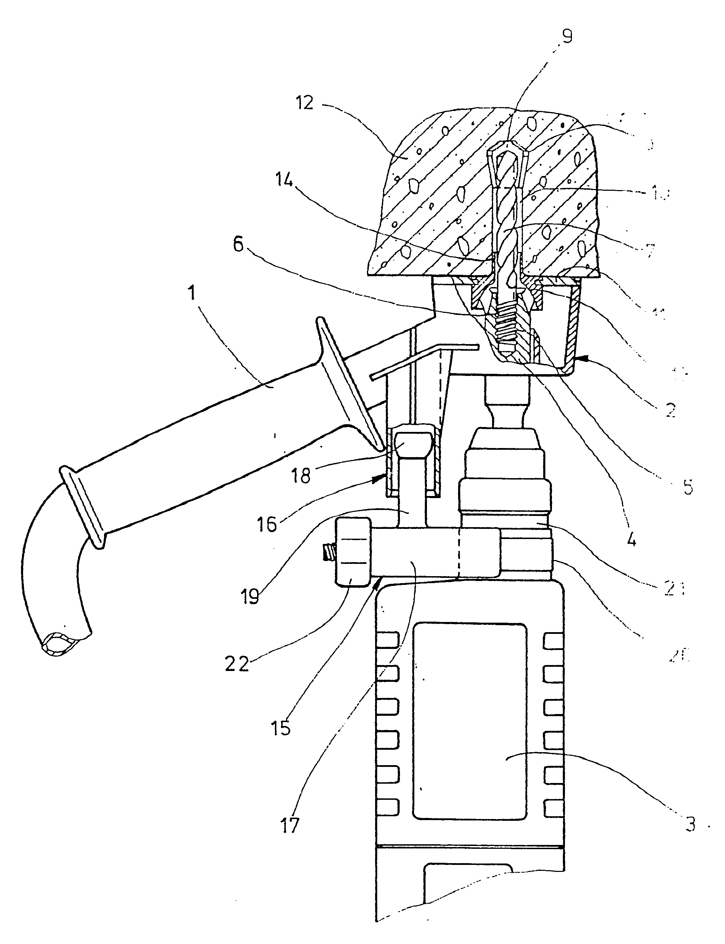

In der Zeichnung ist ein Ausführungsbeispiel der Erfindung dargestellt.

Die Bohrvorrichtung besteht aus der einen als Handgriff ausgebildeten Absaugstutzen 1 aufweisenden Bohrglocke 2, sowie dem in den Bohrhammer eingespannten Anschlagteil 4 mit Innengewinde 5, in das der mit einem Außengewinde 6 versehene Bohrer 7 eingedreht ist. Zum Ausreiben der Hinterschneidung 8 im Bereich des Bohrlochgrundes ist der Bohrer 7 mit einem radial den Bohrschaft überragenden Seitenschneiden aufweisenden Bohrkopf 9 versehen. Zunächst wird in üblicher Weise der zylindrische Bereich der Bohrung 10 gebort. Wenn die an der Bohrglocke 2 befestigte Anschlagplatte 11 an der Außenfläche des Mauerwerks 12 zur Anlage kommt, wird durch Schrägstellen der Bohrmaschine 3 bei gleichzeitiger Rührbewegung die Hinterschneidung 8 des Bohrloches 10 ausgerieben. Als Schwenklager dient dabei die gerundete Stirnseite des Anschlagteiles 4, die sich in einer Mulde 13 der Anschlagplatte 11 abstützt. Zur Zentrierung und Halterung der Anschlagplatte 11 weist diese einen hülsenförmigen, in das Bohrloch 10 eingreifenden Zentrieransatz 14 auf. Das beim Bohren anfallende und sich in der Bohrglocke 2 sammelnde Bohrmehl wird durch eine am Absaugstutzen 1 angeschlossene Absaugvorrichtung abgeführt. Zur Führung und Halterung der Bohrmaschine 3 wird diese zum einen am Pistolengriff und zum anderen an dem als Handgriff ausgebildeten Absaugstutzen 1 gehalten. Zwischen der Bohrvorrichtung und dem Gehäuse der Bohrmaschine besteht eine die Schwenkbewegung und Axialverschiebung ermöglichende Verbindung. Die Verbindung besteht aus den beiden am Bohrmaschinengehäuse und an der Bohrglocke 2 angeordneten Verbindungsteilen 15 und 16, die teleskopartig ineinandergreifen. Das am Bohrmaschinengehäuse angeordnete Verbindungsteil 15 besteht aus einer Tragplatte 17 an der rechtwinklig abstehend ein an seinem Ende einen kugelförmigen Kopf 18 aufweisender Stift Ig angesetzt ist. Dieser Kugelkopf 18 ist in dem als Hülse ausgebildeten und vorzugsweise aus einem Stück mit der Bohrglocke 2 geformten Verbindungsteil 16 soweit eingeschoben, daß er trotz der beim Zurückziehen des Bohrers aus dem Spiel zwischen Anschlagteil 4 und Bohrglocke 2 sowie dem im Schlagwerk eingebauten Spiel sich ergebenden Axialverschiebung noch in Eingriff bleibt. Ferner ermöglicht der kugelförmige Kopf die Schwenkbewegung zur Ausformung der Hinterschneidung 8. Die Tragplatte 17 ist mit einer Stahlmanschette 20 an dem zylindrischen Bund 21 des Gehäuses befestigt. Vor dem Einspannen der Bohrvorrichtung wird diese Stahlmanschette 20 über diesen Bund 21 gestülpt und durch Drehen der sich an der Stirnseite der Tragplatte 17 abstützenden Rändelmutter 22 verspannt. Diese Art der Befestigung ermöglicht es, das bohrmaschinenseitige Verbindungsteil 15 an jede beliebige Stelle zu drehen und festzusetzen, sodaß die Stellung des als Handgriff dienenden Absaugstutzens 1 frei einstellbar ist.

**Patentansprüche**

1. In einen Bohrhammer bzw. eine Schlagbohrmaschine (3) einspannbare und zur Herstellung von Bohrlöchern (10) mit Hinterschneidung (8) bestimmte Bohrvorrichtung, bestehend aus einem Bohrer (7) mit einem radial den Bohrschaft überragende Seitenschneiden aufweisenden Bohrkopf (9), einem im Bereich des Bohrschaftes sitzenden Anschlagteil (4), das sich an einer über den Bohrschaft gestülpten Anschlagplatte (11) zur Bildung eines Schwenklagers abstützt, und einer mit der Anschlagplatte verbindbaren Bohrglocke (22), die einen radial abstehenden, als Handgriff ausgebildeten Absaugstutzen (1) aufweist, dadurch gekennzeichnet, daß zwischen der Bohrglocke (2) und dem Gehäuse der Bohrmaschine (3) eine die Schwenkbewegung und eine Axialverschiebung der Bohrmaschine ermöglichende Verbindung (15, 16) besteht.

2. Bohrvorrichtung nach Anspruch 1, dadurch gekennzeichnet, daß das Bohrmaschinengehäuse und die Bohrglocke (2) mit jeweils einem parallel zur Bohrerachse verlaufenden und gegeneinander gerichteten Verbindungsteil (15, 16) versehen sind, und daß die Verbindungsteile teleskopartig ineinandergreifen.

3. Bohrvorrichtung nach Anspruch 2, dadurch gekennzeichnet, daß das Verbindungsteil (15) des Bohrmaschinengehäuses aus einer Tragplatte (17) besteht, an der ein an seinem Ende einen kugelförmigen Kopf (18) aufweisender Stift (19) angeordnet ist, der in das als Hülse ausgebildete Verbindungsteil (16) der Bohrglocke (2) eingreift.

4. Bohrvorrichtung nach Anspruch 3, dadurch gekennzeichnet, daß die Tragplatte (17) mit einer an sich bekannten, über eine Mutter verspannbaren Stahlbandmanschette (20) an dem Bohrmaschinengehäuse befestigbar ist.

5. Bohrvorrichtung nach Anspruch 3, dadurch gekennzeichnet, daß das als Hülse ausgebildete Verbindungsteil (16) in einem Stück mit der Bohrglocke (2) hergestellt ist.

**Claims**

1. Drilling attachment that can be attached to a hammer drill or a percussion drilling machine (3) and is intended for producing drilled holes (10) having an undercut (8), comprising a drill (7) with a drilling head (9) having lateral cutting edges that project radially from the drill shaft, a stop part (4) in the region of the drill shaft, which stop part is supported, to form a swivel bearing, on a stop plate (11) mounted over the drill shaft, and a drill bell (2) that can be connected to the stop plate and has a radially projecting suction nozzle (1) designed as a handle, characterised in that between the drill bell (2) and the housing of the drilling machine (3) there is a connection (15, 16) that permits swivelling and axial displacement of the drilling machine (3).

2. Drilling attachment according to claim 1, characterised in that the drilling-machine housing and the drill bell (2) are each provided with a connecting part (15, 16), which connecting parts extend parallel to the drill axis and face each other, and that the connecting parts interengage telescopically.

3. Drilling attachment according to claim 2, characterised in that the connecting part (15) of the drilling-machine housing comprises a support plate (17) on which is arranged a pin (19) having a bulbous head (18) at its end, which pin (19) engages the connecting part (16), constructed as a sleeve, of the drill bell (2).

4. Drilling attachment according to claim 3, characterised in that the support plate (17) can be fastened to the drilling-machine housing by means of a steel collar (20) that is known per se and can be tightened by means of a nut.

5. Drilling attachment according to claim 3, characterised in that the connecting part (16) constructed as a sleeve is manufactured in one piece with the drill bell (2).

**Revendications**

1. Dispositif de forage pouvant être encastré dans un marteau perforateur ou une perforatrice (3) à percussion et destiné à réaliser des trous (10) comportant une contre-dépouille (8), dispositif consistant en un foret (7) ayant une tête (9) présentant un taillant latéral en saillie radiale sur la tige du foret, en un élément de butée (4) reposant dans la zone de la tige du foret et qui s'appuie sur une plaque (11) de butée enfancée sur la tige de faret pour former un appui de pivotement, et en une cloche (2) pauvant être reliée à la plaque de butée et présentant un raccord (1) d'aspiration, en saillie radiale et ayant la forme d'une poignée, dispositif caractérisé en ce qu'entre la cloche (2) de forage et le corps de la perforatrice (3) se trouve un dispositif de liaison (15, 16) permettant le mouvement de pivotement et un décalage axial de la perforatrice (3).

2. Dispositif de forage selon la revendication 1, caractérisé en ce que le corps de la perforatrice et la cloche (2) sont chacun équipés d'un élément (15, 16) de liaison, éléments parallèles à l'axe du foret et dirigés l'un vers l'autre et en ce que les éléments de liaison peuvent pénétrer télescopiquement l'un dans l'autre.

3. Dispositif de forage selon la revendication 2, caractérisé en ce que l'élément (15) de liaison du corps de la perforatrice consiste en une plaqué (11) de support sur laquelle est fixée une broche (19) présentant à son extrémité une tête (18) sphérique qui pénètre dans l'élément (16) de liaison fixé sur la cloche (2) et qui a la forme d'une douille.

4. Dispositif de forage selon la revendication 3, caractérisé en ce que la plaque (17) de support peut être fixée sur le corps de la perforatrice à l'aide d'un collier (2a) en ruban d'acier connu en soi, pouvant être serré à l'aide d'un écrou.

5. Dispositif de forage selon la revendication 3, caractérisé en ce que l'élément (18) de liaison, en forme de douille, est réalisé en une seule pièce avec la cloche (2) de forage.